Europäisches Patentamt

European Patent Office

Office européen des brevets

(19)

(11) **EP 0 736 785 B1**

(12) **FASCICULE DE BREVET EUROPEEN**

(45) Date de publication et mention
de la délivrance du brevet:
**19.06.2002   Bulletin 2002/25**

(51) Int Cl.⁷: **G02B 6/293**, G02B 6/124,
G02B 6/126

(21) Numéro de dépôt: **96400717.3**

(22) Date de dépôt: **03.04.1996**

(54) **Démultiplexeur insensible à la polarisation et procédé de réalisation**

Polarisationsunabhängiger Demultiplexer und Herstellungsverfahren

Polarisation insensitive demultiplexer and manufacturing method

(84) Etats contractants désignés:
**DE GB**

(30) Priorité:  **05.04.1995  FR 9504031**

(43) Date de publication de la demande:
**09.10.1996   Bulletin 1996/41**

(73) Titulaire: **ALCATEL**
**75382 Paris Cédex 08 (FR)**

(72) Inventeurs:
 • **Bruno,Adrien**
   **92120 Palaiseau (FR)**
 • **Ramus, Catherine**
   **94400 Vitry (FR)**

(74) Mandataire: **Lamoureux, Bernard et al**
**COMPAGNIE FINANCIERE ALCATEL**
**Département Propriété Industrielle**
**30, Avenue Kléber**
**75116 Paris (FR)**

(56) Documents cités:
**US-A- 5 341 444**

 • **IEEE PHOTONICS TECHNOLOGY LETTERS, vol. 5, no. 6, 1 Juin 1993, pages 707-709, XP000384062 HIROSHI TAKAHASHI ET AL: "POLARIZATION-INSENSITIVE ARRAYED-WAVEGUIDE WAVELENGTH MULTIPLEXER WITH BIREFRINGENCE COMPENSATING FILM"**
 • **ELECTRONICS LETTERS, vol. 29, no. 2, 21 Janvier 1993, pages 201-202, XP000331654 ZIRNGIBL M: "POLARISATION INDEPENDENT 8 X 8 WAVEGUIDE GRATING MULTIPLEXER ON INP"**
 • **OPTICS LETTERS, vol. 17, no. 7, 1 Avril 1992, pages 499-501, XP000262595 HIROSHI TAKAHASHI ET AL: "POLARIZATION-INSENSITIVE ARRAYED-WAVEGUIDE GRATING WAVELENGTH MULTIPLEXER ON SILICON"**

**Description**

La présente invention concerne le domaine technique général de l'opto-électronique et, plus précisément, un filtre multilongueur d'onde du type comprenant un faisceau de guides optiques réalisés sur un même substrat, agencés de manière à ce que la réponse en longueur d'onde du filtre dépende des déphasages subis par la lumière se propageant dans les guides.

Diverses approches technologiques ont été proposées pour obtenir l'indépendance à la polarisation d'un tel filtre multilongueur d'onde.

On peut citer à cet égard la publication "Polarization-Independent InP-Based Phased-Array Wavelength Demultiplexer with Flattened Wavelength Response" L H. Spiekmann et al., Conférence ECOC 94.

Ainsi, on a proposé, comme rappelé dans l'article précité, une structure dans laquelle une lame de quartz demi-onde est placée à mi-chemin sur le faisceau de guides optiques pour permuter les modes de polarisation TE et TM.

On a proposé, dans l'article de Zirngibl et al. intitulé "Polarization-Independent 8 x 8 Waveguide Grating Multiplexer on InP" paru, dans Electronic Letters, Vol. 29, pages 201-202, Janvier 1993, d'utiliser des ordres différents pour les modes de polarisation TM et TE.

On peut également citer une méthode consistant à séparer spatialement les modes de polarisation TE et TM, proposée par M.R. Amersfoort et al. dans l'article intitulé "A phased-array wavelength demultiplexer with flattened wavelength response", paru dans Electronic Letters, Vol. 30, 1994.

On peut encore citer une méthode consistant à séparer spatialement les modes de polarisation TE et TM tout en considérant des ordres différents, proposée par Spiekmann et al. dans le premier article précité.

On a proposé, dans l'article "Polarization-Insensitive Arrayed-Waveguide Wavelength Multiplexer with Birefringence Compensating Film", Takahashi et al, IEEE Photonics Technology Letters, Vol 5, No. 6, juin 1993, de déposer un film de silicium amorphe présentant une géométrie particulière sur le faisceau de guides pour obtenir au moins pour chaque guide deux portions de biréfringences différentes.

On peut également citer une méthode similaire décrite dans le brevet US-5 341 444 de Henry et al.

Les méthodes connues précitées n'offrent pas entière satisfaction. La méthode consistant à rapporter une lame de quartz présente l'inconvénient d'entraîner des pertes de couplage entre cette dernière et les guides optiques, et les performances des méthodes qui utilisent des ordres différents pour les modes de polarisation TE et TM sont limitées en termes du nombre de canaux de longueurs d'ondes différentes pouvant être séparés par le filtre. Les méthodes jouant sur la géométrie des guides optiques pour modifier la biréfringence sont difficiles à mettre en oeuvre technologiquement. Enfin, les méthodes consistant à modifier la biréfringence des guides par dépôt d'un film en surface ne se prêtent pas à une intégration monolithique du filtre.

La présente invention a pour objet de remédier aux inconvénients précités et propose un nouveau filtre multilongueur d'onde, indépendant à la polarisation, qui soit de fabrication aisée, convienne à une intégration monolithique, et qui permette de réaliser le démultiplexage d'un grand nombre de canaux.

L'invention y parvient en proposant un filtre comme défini dans la revendication 1.

Dans une réalisation préférée de l'invention, les guides optiques dudit faisceau ont dans deux zones d'extrémité même biréfringence, et dans une zone intermédiaire une biréfringence différente de celle desdites zones d'extrémité, les transitions entre chaque zone d'extrémité et la zone intermédiaire s'étendant selon des plans respectifs inclinés par rapport à la direction de propagation de la lumière dans les guides.

Dans une réalisation préférée de l'invention, l'adaptateur de mode présente une forme en sablier.

Dans une réalisation préférée de l'invention, lesdites portions de guide reliées par l'adaptateur de mode présentent des structures respectivement de type dilué et simple hétérostructure.

D'autres caractéristiques et avantages de la présente invention apparaîtront à la lecture de la description détaillée qui va suivre, d'exemples de réalisation non limitatifs de l'invention, et à l'examen du dessin annexé sur lequel :

- la figure 1 est une vue schématique d'un filtre multilongueur d'onde conforme à un premier exemple de réalisation de l'invention,
- la figure 2 est une vue schématique d'un filtre multilongueur d'onde conforme à un deuxième exemple de réalisation de l'invention,
- la figure 3 est une vue illustrant un détail de réalisation du filtre multilongueur d'onde représenté sur la figure 1,
- la figure 4 représente en perspective et de façon schématique un premier exemple de réalisation d'un adaptateur de mode,
- la figure 5 est une vue à échelle agrandie d'un détail de réalisation du filtre représenté sur la figure 1,
- la figure 6 est une section selon le trait de coupe VI-VI de la figure 5,
- la figure 7 est une section selon le trait de coupe VII-VII de la figure 5,
- la figure 8 est une section selon le trait de coupe VIII-VIII de la figure 5,
- la figure 9 représente en perspective et de façon schématique un deuxième exemple de réalisation d'un adaptateur de mode, et
- la figure 10 représente en perspective et de façon schématique un troisième exemple de réalisation d'un adaptateur de mode.

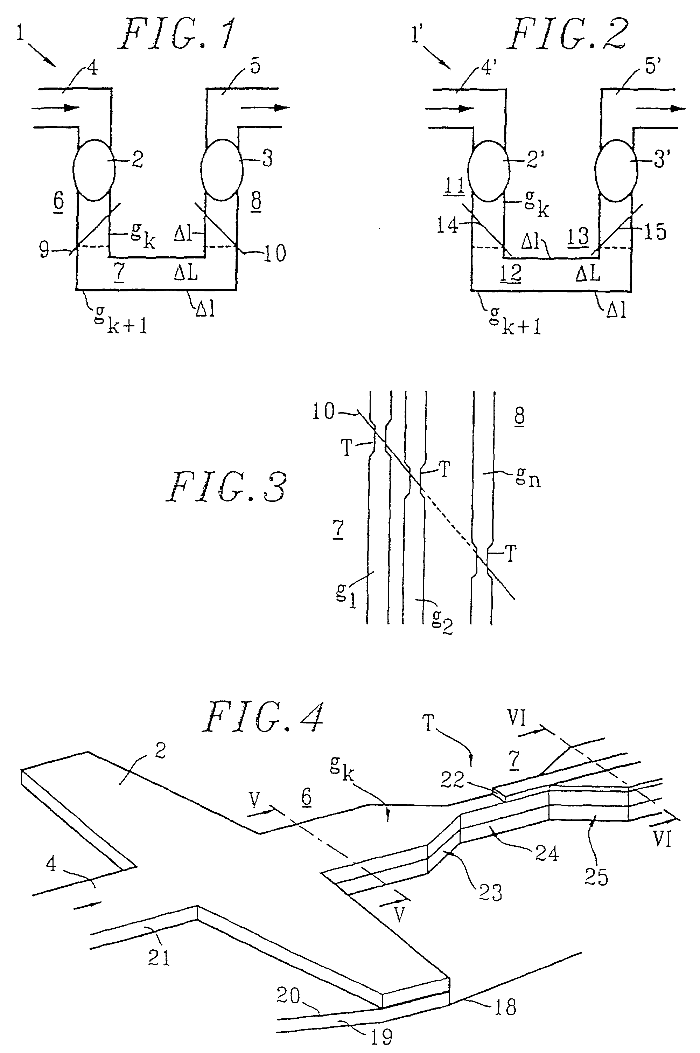

On a représenté sur la figure 1 un filtre multilongueur d'onde 1 conforme à un premier exemple de réalisation de l'invention. Ce filtre comporte un faisceau de n guides optiques $g_1$, ..., $g_n$ dont on n'a représenté que deux guides consécutifs $g_k$, $g_{k+1}$ (k compris ici entre 1 et n-1) dans un souci de clarté du dessin. Ce faisceau de guides optiques $g_1$, ..., $g_n$ relie deux zones d'expansion 2, 3 constituées dans l'exemple de réalisation décrit par des dioptres plans. Le dioptre 2 reçoit de la lumière par un guide optique 4 et la répartit dans les guides optiques $g_1$, ..., $g_n$ du faisceau. Ces derniers sont agencés de manière à faire parcourir à la lumière des chemins optiques différents. Les ondes lumineuses déphasées en sortie des guides optiques $g_1$, ..., $g_n$ sont réunies dans le dioptre 3 et interfèrent selon le principe de l'interférométrie de Mach Zender. La lumière envoyée dans le filtre 1 par le guide optique 4 est ainsi filtrée en longueur d'onde et sort par au moins un guide optique 5 pour être dirigée par exemple vers un récepteur optique non représenté ou tout autre composant optique ou opto-électronique.

Conformément à l'invention, pour obtenir l'indépendance à la polarisation du filtre, chaque guide optique $g_k$ (k compris ici entre 1 et n) présente au moins deux portions de guide de biréfringences différentes, reliées par un adaptateur de mode. Plus précisément, dans le premier exemple de réalisation de l'invention, chaque guide optique $g_k$ présente trois portions de guide s'étendant dans des zones respectivement référencées 6, 7 et 8, séparées par des zones de transition 9 et 10. La zone d'extrémité 6 s'étend depuis le dioptre plan 2 jusqu'à la zone de transition 9 et présente un indice effectif n et une biréfringence $B_2$. La zone intermédiaire 7 s'étend entre les zones de transition 9 et 10, présente un indice effectif n' et une biréfringence $B_1$. La zone d'extrémité 8 s'étend entre la zone de transition 10 et le dioptre plan 3, présente un indice effectif n et une biréfringence $B_2$. Chaque zone de transition 9, 10 s'étend selon un plan coupant obliquement le faisceau de guides optiques $g_1$, ..., $g_n$ comme illustré schématiquement sur la figure 3.

On a représenté sur la figure 2 un filtre 1' conforme à un deuxième exemple de réalisation de l'invention, comprenant un faisceau de guides optiques $g_1$, ..., $g_n$ reliant deux zones d'expansion 2', 3'. La zone d'expansion 2' reçoit la lumière par un guide optique 4' pour la répartir dans les guides $g_1$, ..., $g_n$. Cette zone d'expansion 2' est constituée par un dioptre plan dans l'exemple décrit. En sortie des guides optiques $g_1$, ..., $g_n$ la lumière est collectée par la zone d'expansion 3', reliée à un guide optique 5'. La zone d'expansion 3' est constituée par un dioptre plan dans l'exemple décrit. Chaque guide optique $g_k$ du faisceau présente trois portions de guide s'étendant dans des zones respectivement référencées 11, 12 et 13, séparées par des zones de transition 14 et 15. Plus précisément, la zone d'extrémité 11 s'étend entre le dioptre plan 2' et la zone de transition 14, présente un indice effectif n' et une biréfringence $B_1$. La zone intermédiaire 12 s'étend entre les zones de transition 14 et 15, présente un indice effectif n et une biréfringence $B_2$. La zone d'extrémité 13 s'étend entre la zone de transition 15 et le dioptre plan 3', présente un indice effectif n' et une biréfringence $B_1$.

Pour la suite de la description, on notera $\Delta L$ le pas du faisceau de guides optiques $g_1$, ..., $g_n$ des filtres 1 ou 1', qui correspond à la différence de chemin optique entre deux guides optiques consécutifs $g_k$ et $g_{k+1}$. On notera $\Delta l$ la variation de chemin optique induite par une zone de transition 9, 10, 14 ou 15 sur deux guides consécutifs $g_k$ et $g_{k+1}$. On notera que l'inclinaison des zones de transition 9 et 10 est inverse de celle des zones de transition 14 et 15. Dans la réalisation de la figure 1, chaque guide $g_{k+1}$ parcourt davantage de chemin (2 $\Delta l$ en plus) dans les zones d'extrémité 6 et 8 que le guide $g_k$, tandis que dans la réalisation de la figure 2 c'est le contraire.

L'indépendance à la polarisation pour les filtres 1 ou 1' est obtenue lorsque la relation suivante est vérifiée :

$$B_1 \ \Delta L + \Delta B \ \Delta l = 0, \qquad (1)$$

avec

$$\Delta B = B_2 - B_1.$$

On a également les relations suivantes :

$$\Delta l = - B_1 \ \Delta L/\Delta B, \qquad (2)$$

$$B_1 = (n'_{TE} - n'_{TM}) / n' \qquad (3)$$

et

$$B_2 = (n_{TE} - n_{TM}) / n. \qquad (4)$$

Conformément à l'invention, la transmission de la lumière entre deux portions d'un guide optique situées respectivement dans une zone d'extrémité et une zone intermédiaire s'effectue à l'aide d'un adaptateur de mode, se situant à l'intersection du guide concerné et de la zone de transition séparant ladite zone d'extrémité et ladite zone intermédiaire, comme cela va être précisé dans la suite.

Les filtres multilongueurs d'onde 1 et 1' sont réalisés après dépôt par épitaxie en phase vapeur (MOCVD), en une seule étape, sur un substrat plan 16 en matériau binaire InP, de la succession de couches suivante :

- une couche de confinement inférieure 17 en matériau binaire InP de 1 µm d'épaisseur,

- une couche de guidage inférieure 18, en matériau quaternaire InGaAsP, de 0,1 µm d'épaisseur et de longueur d'onde de bande interdite $\lambda_g$ égale à 1,3 µm, d'indice de réfraction supérieur à celui de la couche de confinement inférieur 17,

- une couche de confinement intermédiaire 19, en matériau binaire InP, de 1 µm d'épaisseur, d'indice de réfraction inférieur à celui de la couche de guidage inférieure 18,

- une couche de guidage intermédiaire 20, en matériau quaternaire InGaAsP, de 0,1 µm d'épaisseur, de longueur d'onde de bande interdite $\lambda_g$ égale à 1,3 µm, d'indice de réfraction supérieur à celui de la couche de confinement intermédiaire 19,

- une couche de confinement supérieure 21, en matériau binaire InP, de 1 µm d'épaisseur et d'indice de réfraction inférieur à celui de la couche de guidage intermédiaire 20,

- une couche de guidage supérieure 22, en matériau quaternaire InGaAsP, de 0,65 µm d'épaisseur, de longueur d'onde de bande interdite $\lambda_g$ égale à 1,3 µm et d'indice de réfraction supérieur à celui de la couche de confinement supérieure 21.

Les guides optiques 4 et 5 du filtre 1 sont réalisés après formation d'un masque, de manière connue en soi, par enlèvement de la couche de guidage supérieure 22 et gravure en ruban de la couche de confinement supérieure 21. Les zones d'expansion 2 et 3 sont réalisées par enlèvement de la couche de guidage supérieure 22 et gravure, du côté des guides optiques 4 et 5, de la couche de confinement supérieure 21 et, du côté du faisceau de guides optiques $g_k$, par gravure plus profonde jusqu'à la couche de guidage inférieure 18. Les guides optiques $g_1$, ..., $g_k$ sont réalisés, en ce qui concerne les portions s'étendant dans les zones d'extrémité 6 et 8, par enlèvement de la couche de guidage supérieure 22 et gravure jusqu'à la couche de guidage inférieure 18, et en ce qui concerne la portion intermédiaire 7, par gravure en ruban de la couche de guidage supérieure 22 et gravure plus profonde, de part et d'autre du ruban jusqu'à la couche de guidage inférieure 18.

Dans les zones d'extrémité 6 et 8, la structure des guides optiques est du type "dilué" et dans la zone intermédiaire 7 la structure des guides optiques est du type "simple hétérostructure". La lumière se propage dans les portions de guides présentant la structure diluée avec un mode large et dans les portions de guide présentant la structure de type simple hétérostructure avec un mode étroit. La structure de type dilué présente un indice effectif, équivalent à l'ensemble des couches, proche de celui du substrat et la biréfringence est faible (relativement à la biréfringence d'une simple hétérostructure), de l'ordre de 5 10$^{-3}$ dans les exemples de réalisation décrits.

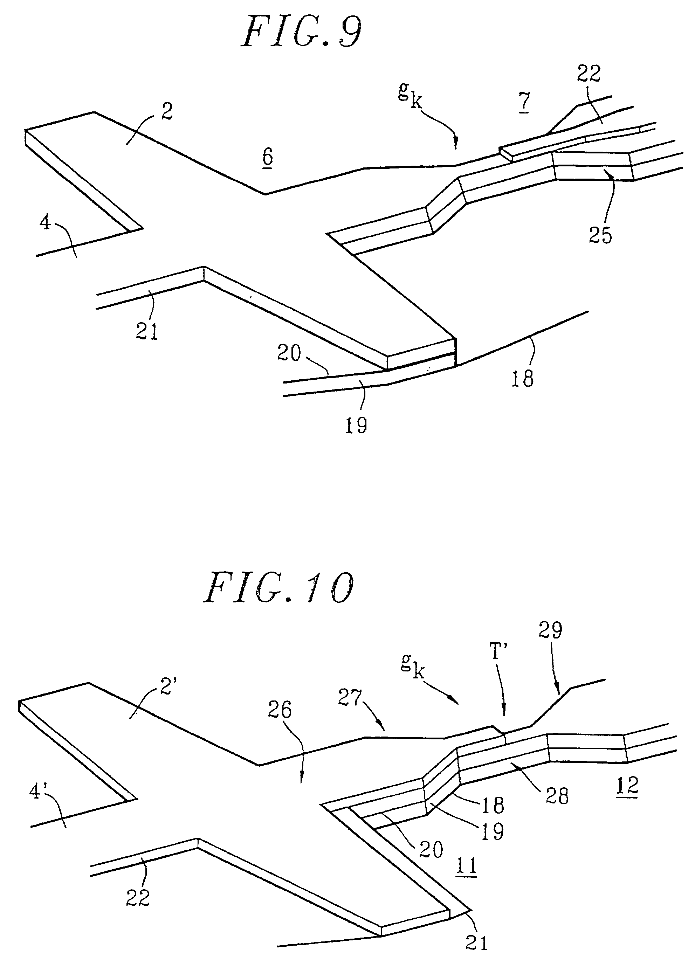

Chaque guide optique $g_k$ présente, dans les zones d'extrémité 6 et 8, une section trapézoïdale se rétrécissant vers le haut comme représenté sur la figure 6. La forme trapézoïdale améliore le confinement de la lumière dans les virages. La largeur des couches de confinement intermédiaire 19, de guidage supérieure 20 et de confinement supérieure 21 décroît vers le haut, valant 9,6 µm à la base et 4 µm au sommet. Chaque guide optique $g_k$ est réalisé, dans la zone intermédiaire 7, par gravure en ruban de la couche de guidage supérieure 22, comme représenté plus particulièrement sur la figure 8. La largeur de ce ruban vaut 2 µm.

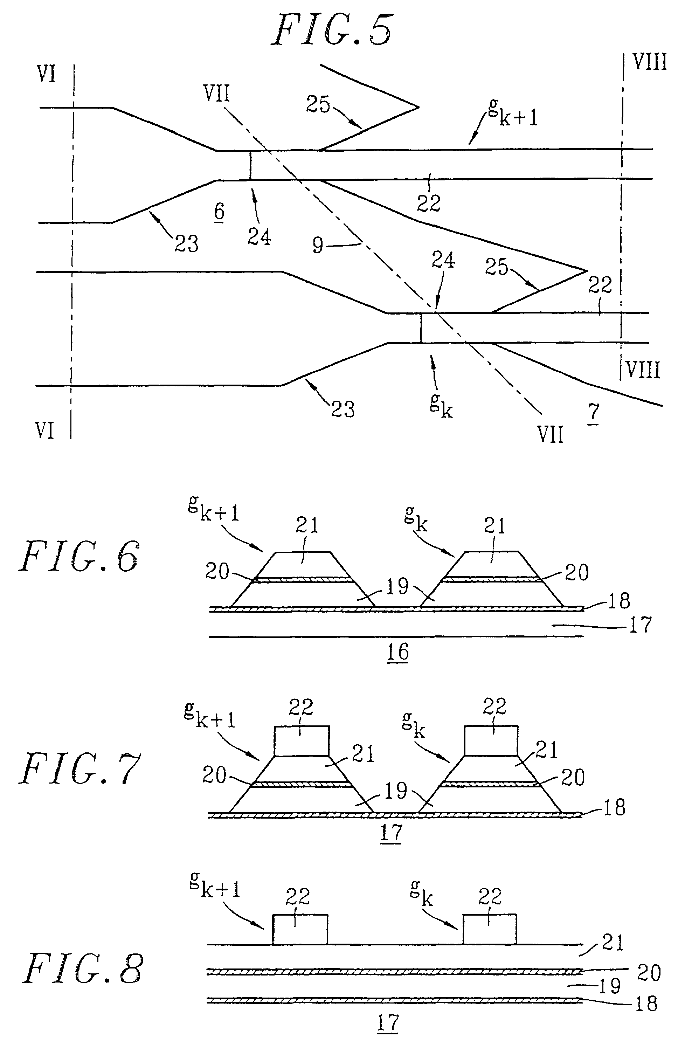

Pour réaliser un adaptateur de mode T à la jonction d'une portion de guide optique située dans une zone d'extrémité 6 ou 8 et d'une portion de guide optique située dans la zone intermédiaire 7, on grave le guide optique en forme de sablier comme représenté sur les figures 3, 4 et 5. La largeur du guide optique situé dans la zone d'extrémité 6 décroît linéairement dans une région référencée 23 jusqu'à atteindre 2 µm. Elle est ensuite constante dans une région référencée 24, constituant la partie centrale du sablier. Le ruban gravé dans la couche de guidage 22 arrive à mi-longueur environ de cette région 24. Dans cette dernière, le ruban 22 repose sur un empilement de couches de confinement intermédiaire 19, de guidage intermédiaire 20 et de confinement supérieure 21 présentant une section de forme trapézoïdale se rétrécissant vers le haut. La largeur de l'empilement croît linéairement dans une région référencée 25 en direction de la zone intermédiaire 7. Après élargissement, les couches sur lesquelles reposent les rubans associés à chaque guide g1, ..., gn dans la zone intermédiaire 7 s'étendent continuement sous les rubans, comme représenté sur les figures 5 et 8.

On a représenté sur la figure 9 une variante de réalisation d'adaptateur de mode pour un filtre 1 dans lequel le ruban gravé dans la couche de guidage supérieure 22 s'élargit dans la région de transition 25 pour atteindre 3 µm.

Les guides optiques 4' et 5' du filtre multilongueur d'onde 1' sont réalisés, après formation d'un masque, par gravure en ruban de la couche de guidage supérieure 22. Les zones d'expansion 2' et 3' sont également réalisées par gravure de la couche de guidage supérieure 22. Les guides optiques $g_1$, ..., $g_n$ sont réalisés, en ce qui concerne leurs portions s'étendant dans les zones d'extrémité 11 et 13, par gravure en ruban de la couche de guidage supérieure 22 dans une région 26 adjacente à une zone d'expansion 2' ou 3' puis par gravure plus profonde, jusqu'à la couche de guidage inférieure 18, au-delà de cette région 26, comme cela apparaît sur la figure 9. Les guides optiques $g_1$, ..., $g_n$ sont réalisés, dans la zone intermédiaire 12, par enlèvement de la couche de guidage supérieure 22 et gravure jusqu'à la couche de guidage inférieure 18.

Des adaptateurs de mode T' sont réalisés entre chaque portion de guide s'étendant dans une zone d'extrémité 11 ou 13 et la portion de guide s'étendant dans la zone intermédiaire 12. Chaque adaptateur de mode T' présente une forme en sablier comme représenté sur la figure 9. Plus précisément, la largeur de la portion de guide située dans une zone d'extrémité 11 ou 13 décroît linéairement dans une région référencée 27 pour passer de 3 μm à 2 μm. Elle est ensuite constante dans une région référencée 28, constituant la partie centrale du sablier. La couche de guidage supérieure 22 s'interrompt à mi-longueur environ de cette région 28. La largeur de l'empilement des couches de confinement intermédiaire 19, de guidage intermédiaire 20 et de confinement supérieur 21 s'élargit dans une région référencée 29 jusqu'à atteindre, dans l'exemple décrit, une largeur dans la zone intermédiaire 12 égale à 4 μm (mesurée au sommet de la section trapézoïdale).

Finalement, l'invention permet de réaliser un filtre multilongueur d'onde insensible à la polarisation, pouvant être intégré au sein d'une structure monolithique avec d'autres composants optiques ou optoélectroniques.

La configuration correspondant à la figure 1, dans laquelle la zone intermédiaire 7 présente une structure de type simple hétérostructure et les zones d'extrémité 6, 8 une structure de type dilué présente l'avantage de conduire à un filtre 1 d'encombrement réduit, du fait que la largeur des guides optiques est moindre sur leur portion située dans la zone intermédiaire, de type simple hétérostructure, que sur leur portion située dans les zones d'extrémité de type dilué.

La configuration correspondant à la figure 2, dans laquelle les zones d'extrémité 11, 13 présentent une structure de type simple hétérostructure et la zone intermédiaire 12 une structure de type dilué, présente l'avantage d'augmenter le nombre de guides optiques que l'on peut coupler aux dioptres plans 2' et 3', toujours en raison du fait que la largeur des guides optiques est moindre quand leur structure est du type simple hétérostructure.

Bien entendu, l'invention n'est pas limitée aux exemples de réalisation décrits. On peut notamment remplacer, en variante, une structure de type dilué par une autre structure présentant un indice effectif (indice équivalent à l'ensemble des couches) proche de l'indice du substrat, de manière à obtenir une biréfringence faible. On peut également enterrer les structures de filtre décrites dans un matériau présentant un indice de réfraction plus faible que celui des couches de guidage, par exemple de l'InP.

## Revendications

1. Filtre multilongueur d'onde (1 ; 1') à faisceau de guides optiques ($g_1$, ..., $g_n$) réalisés sur un même substrat et agencés de manière à ce que la réponse en longueur d'onde du filtre dépende du déphasage subi par la lumière dans les guides optiques du faisceau, le filtre étant rendu insensible à la polarisation par une variation de la biréfringence des guides optiques, les guides optiques présentant chacun au moins sur deux portions de leur longueur des biréfringences différentes, et **caractérisé en ce que** lesdites portions sont reliées par un adaptateur de mode (T ; T').

2. Filtre selon la revendication 1, **caractérisé en ce que** les guides optiques dudit faisceau ont dans deux zones d'extrémité (6, 8 ; 11, 13) même biréfringence et dans une zone intermédiaire (7 ; 12) une biréfringence différente de celle desdites zones d'extrémité, les transitions entre chaque zone d'extrémité et la zone intermédiaire s'étendant selon des plans respectifs inclinés par rapport à la direction de propagation de la lumière dans les guides.

3. Filtre selon l'une des revendications 1 et 2, **caractérisé en ce que** l'adaptateur de mode (T; T') présente une forme en sablier.

4. Filtre selon l'une des revendications 1 à 3, **caractérisé en ce que** lesdites portions de guide reliées par l'adaptateur de mode (T ; T') présentent des structures respectivement de type dilué ayant un mode de propagation large et simple hétérostructure ayant un mode de propagation étroit.

5. Filtre selon la revendication 4, **caractérisé en ce que** ladite structure de type dilué comporte l'empilement de couches suivant :

   - une couche de confinement inférieure (17), de préférence en matériau binaire InP et de 1 μm d'épaisseur,
   - une couche de guidage inférieure (18), de préférence en matériau quaternaire InGaAsP et de 0,1 μm d'épaisseur et de longueur d'onde de bande interdite $\lambda_g$ égale à 1,3 μm, d'indice de réfraction supérieur à celui de la couche de confinement inférieure (17),
   - une couche de confinement intermédiaire (19), de préférence en matériau binaire InP et de 1 μm d'épaisseur, d'indice de réfraction inférieur à celui de la couche de guidage inférieure (18),
   - une couche de guidage intermédiaire (20), de préférence en matériau quaternaire InGaAsP et de 0,1 μm d'épaisseur et de longueur d'onde de bande interdite $\lambda_g$ égale à 1,3 μm, d'indice de réfraction supérieur à celui de la couche de confinement intermédiaire (19),
   - une couche de confinement supérieure (21), de préférence en matériau binaire InP et de 1 μm d'épaisseur, d'indice de réfraction inférieur à celui de la couche de guidage intermédiaire (20).

6. Filtre selon l'une des revendications 4 et 5, **caractérisé en ce que** ladite structure de type simple hétérostructure comporte l'empilement de couches suivant :

- une couche de confinement inférieure (17), de préférence en matériau binaire InP et de 1 μm d'épaisseur,
- une couche de guidage inférieure (18), de préférence en matériau quaternaire InGaAsP et de 0,1 μm d'épaisseur et de longueur d'onde de bande interdite $\lambda_g$ égale à 1,3 μm, d'indice de réfraction supérieur à celui de la couche de confinement inférieure (17),
- une couche de confinement intermédiaire (19), de préférence en matériau binaire InP et de 1 μm d'épaisseur et d'indice de réfraction inférieur à celui de la couche de guidage inférieure (18),
- une couche de guidage intermédiaire (20), de préférence en matériau quaternaire InGaAsP et de 0,1 μm d'épaisseur et de longueur d'onde de bande interdite $\lambda_g$ égale à 1,3 μm, d'indice de réfraction supérieur à celui de la couche de confinement intermédiaire (19),
- une couche de confinement supérieure (21), de préférence en matériau binaire InP et de 1 μm d'épaisseur, d'indice de réfraction inférieur à celui de la couche de guidage intermédiaire (20),
- une couche de guidage supérieure (22), de préférence en matériau quaternaire InGaAsP et de 0,65 μm d'épaisseur et de longueur d'onde de bande interdite $\lambda_g$ égale à 1,3 μm, d'indice de réfraction supérieur à celui de la couche de confinement supérieure (21).

**7.** Filtre selon l'une des revendications 5 et 6, **caractérisé en ce que** ledit empilement des couches de confinement intermédiaire (19), de guidage intermédiaire (20) et de confinement supérieure (21) est gravé de manière à présenter une section, prise dans un plan de coupe transversal à la direction de propagation de la lumière, trapézoïdale se rétrécissant vers le haut.

**8.** Procédé de réalisation d'un filtre multilongueur d'onde (1) à faisceau de guides optiques ($g_1$, ..., $g_n$), du type dans lequel l'insensibilité à la polarisation est obtenue par une variation de la biréfringence des guides optiques, ces derniers présentant chacun au moins sur deux portions de leur longueur des biréfringences différentes, **caractérisé en ce qu'**il comporte les étapes consistant à:

. déposer par épitaxie la succession de couches suivante :

  - une couche de confinement inférieure (17), de préférence en matériau binaire InP et

de 1 μm d'épaisseur,

- une couche de guidage inférieure (18), de préférence en matériau quaternaire InGaAsP et de 0,1 μm d'épaisseur et de longueur d'onde de bande interdite $\lambda_g$ égale à 1,3 μm, d'indice de réfraction supérieur à celui de la couche de confinement inférieure (17),
- une couche de confinement intermédiaire (19), de préférence en matériau binaire InP et de 1 μm d'épaisseur et d'indice de réfraction inférieur à celui de la couche de guidage inférieure (18),
- une couche de guidage intermédiaire (20), de préférence en matériau quaternaire InGaAsP et de 0,1 μm d'épaisseur et de longueur d'onde de bande interdite $\lambda_g$ égale à 1,3 μm, d'indice de réfraction supérieur à celui de la couche de confinement intermédiaire (19),
- une couche de confinement supérieure (21), de préférence en matériau binaire InP et de 1 μm d'épaisseur, d'indice de réfraction inférieur à celui de la couche de guidage intermédiaire (20),
- une couche de guidage supérieure (22), de préférence en matériau quaternaire InGaAsP et de 0,65 μm d'épaisseur et de longueur d'onde de bande interdite $\lambda_g$ égale à 1,3 μm, d'indice de réfraction supérieur à celui de la couche de confinement supérieure (21).

. former un masque,
. réaliser des guides optiques (4, 5) d'amenée et de départ de la lumière du filtre (1) par enlèvement de la couche de guidage supérieure (22) et gravure en ruban de la couche de confinement supérieure (21),
. réaliser des zones d'expansion (2, 3) reliées par le faisceau de guides optiques par enlèvement de la couche de guidage supérieure (22) et gravure, du côté des guides optiques (4, 5) d'amenée et de départ de la lumière du filtre (1), de la couche de confinement supérieure (21) et, du côté du faisceau de guides optiques ($g_1$, ..., $g_n$), par gravure plus profonde jusqu'à la couche de guidage inférieure (18),
. réaliser des portions de guides optiques ($g_1$, ..., $g_n$) s'étendant dans des zones d'extrémité (6, 8) par enlèvement de la couche de guidage supérieure (22) et gravure jusqu'à la couche de guidage inférieure (18),
. réaliser des portions de guides optiques ($g_1$, ..., $g_n$) s'étendant dans une zone intermédiaire (7) reliant lesdites zones d'extrémité par gravure en ruban de la couche de guidage supérieure (22) et gravure plus profonde, de part et d'autre du ruban réalisé dans la couche de guidage supérieure (22) jusqu'à la couche de guidage inférieure (18),

. graver des adaptateurs de mode (T) en forme de sablier à la jonction des portions de guides respectivement situées dans une zone d'extrémité (6 ; 8) et dans la zone intermédiaire (7).

9. Procédé de réalisation d'un filtre multilongueur d'onde (1') à faisceau de guides optiques ($g_1$, ..., $g_n$), du type dans lequel l'insensibilité à la polarisation est obtenue par une variation de la biréfringence des guides optiques, ces derniers présentant chacun au moins sur deux portions de leur longueur des biréfringences différentes, **caractérisé en ce qu'**il comporte les étapes consistant à :

. déposer par épitaxie la succession de couches suivante :

- une couche de confinement inférieure (17), de préférence en matériau binaire InP et de 1 μm d'épaisseur,
- une couche de guidage inférieure (18), de préférence en matériau quaternaire In-GaAsP et de 0,1 μm d'épaisseur et de longueur d'onde de bande interdite $\lambda_g$ égale à 1,3 μm, d'indice de réfraction supérieur à celui de la couche de confinement inférieure (17),
- une couche de confinement intermédiaire (19), de préférence en matériau binaire InP et de 1 μm d'épaisseur et d'indice de réfraction inférieur à celui de la couche de guidage inférieure (18),
- une couche de guidage intermédiaire (20), de préférence en matériau quaternaire In-GaAsP et de 0,1 μm d'épaisseur et de longueur d'onde de bande interdite $\lambda_g$ égale à 1,3 μm, d'indice de réfraction supérieur à celui de la couche de confinement intermédiaire (19),
- une couche de confinement supérieure (21), de préférence en matériau binaire InP et de 1 μm d'épaisseur, d'indice de réfraction inférieur à celui de la couche de guidage intermédiaire (20),
- une couche de guidage supérieure (22), de préférence en matériau quaternaire In-GaAsP et de 0,65 μm d'épaisseur et de longueur d'onde de bande interdite $\lambda_g$ égale à 1,3 μm, d'indice de réfraction supérieur à celui de la couche de confinement supérieure (21).

. former un masque,
. réaliser des guides optiques (4', 5') d'amenée et de départ de la lumière du filtre par gravure en ruban de la couche de guidage supérieure (22),

. former des zones d'expansion (2', 3') reliées par le faisceau de guides optiques par gravure de la couche de guidage supérieure (22),

. réaliser des portions de guides optiques ($g_1$, ..., $g_n$) s'étendant dans des zones d'extrémité (11, 13) par gravure en ruban de la couche de guidage supérieure (22) dans des régions (26) adjacentes aux zones d'expansion (2', 3') puis par gravure plus profonde, jusqu'à la couche de guidage inférieure (18), au-delà de ces régions (26),

. réaliser des portions de guides optiques ($g_1$, ..., $g_n$) s'étendant dans une zone intermédiaire (12) reliant lesdites zones d'extrémité par enlèvement de la couche de guidage supérieure (22) et gravure jusqu'à la couche de guidage inférieure (18),

. graver des adaptateurs de mode (T') en forme de sablier à la jonction des portions de guides respectivement situées dans une zone d'extrémité (11 ; 13) et dans la zone intermédiaire (12).

**Patentansprüche**

1. Mehrwellenlängenfilter (1; 1') mit einem Bündel von optischen Leitern ($g_1$, ..., $g_n$), die auf einem gleichen Substrat gebildet und so angeordnet sind, dass die Wellenlängenantwort des Filters von der Phasenverschiebung des Lichtes in den optischen Leitern des Bündels abhängt, wobei das Filter durch eine Variation der Doppelbrechung der optischen Leiter polarisationsunempfindlich gemacht ist und die optischen Leiter jeweils wenigstens auf zwei Abschnitten ihrer Länge unterschiedliche Doppelbrechungen aufweisen, **dadurch gekennzeichnet, dass** die Abschnitte durch einen Modenadapter (T; T') verbunden sind.

2. Filter nach Anspruch 1, **dadurch gekennzeichnet, dass** die optischen Leiter des Bündels in zwei Endzonen (6, 8; 11, 13) gleiche Doppelbrechung und in einer Zwischenzone (7; 12) eine von der der Endzonen verschiedene Doppelbrechung haben, und dass sich die Übergänge zwischen jeder Endzone und der Zwischenzone sich jeweils in Ebenen erstrecken, die in Bezug auf die Ausbreitungsrichtung des Lichtes in den Leitern geneigt sind.

3. Filter nach einem der Ansprüche 1 und 2, **dadurch gekennzeichnet, dass** der Modenadapter (T; T') eine Sanduhrform aufweist.

4. Filter nach einem der Ansprüche 1 bis 3, **dadurch gekennzeichnet, dass** die durch Modenadapter (T; T') verbundenen Abschnitte des Leiters jeweils Strukturen eines verdünnten Typs mit einem breiten Ausbreitungsmodus bzw. mit einer einfachen Heterostruktur und schmalem Ausbreitungsmodus aufweisen.

5. Filter nach Anspruch 4, **dadurch gekennzeichnet, dass** die Filterstruktur vom verdünnten Typ die folgende Stapelung von Schichten aufweist:

- eine untere Einschließungsschicht (17), vorzugsweise aus binärem InP-Material und mit 1 μm Dicke,

- eine untere Führungsschicht (18), vorzugsweise aus quaternärem InGaAsP-Material und mit 0,1 μm Dicke und einer Wellenlänge des verbotenen Bandes $\lambda_g$ von 1,3 μm, mit einem höheren Brechungsindex als dem der unteren Einschließungsschicht (17),

- eine intermediäre Einschließungsschicht (19), vorzugsweise aus binärem InP-Material und mit 1 μm Dicke, mit einem niedrigeren Brechungsindex als dem der unteren Führungsschicht (18),

- eine intermediäre Führungsschicht (20), vorzugsweise aus quaternärem InGaAsP-Material und mit 0,1 μm Dikke und mit einer Wellenlänge des verbotenen Bandes von 1,3 μm, mit einem höheren Brechungsindex als dem der intermediären Einschließungsschicht (19),

- eine obere Einschließungsschicht (21), vorzugsweise aus binärem InP-Material und mit 1 μm Dicke, mit einem niedrigeren Brechungsindex als dem der intermediären Führungsschicht (20).

6. Filter nach einem der Ansprüche 4 und 5, **dadurch gekennzeichnet, dass** die Struktur vom Typ mit einfacher Heterostruktur die folgende Stapelung von Schichten umfasst:

- eine untere Einschließungsschicht (17), vorzugsweise aus binärem InP-Material und mit 1 μm Dicke,

- eine untere Führungsschicht (18), vorzugsweise aus quaternärem InGaAsP-Material und mit 0,1 μm Dicke, mit einer Wellenlänge des verbotenen Bandes $\lambda_g$ von 1,3 μm und einem höheren Brechungsindex als dem der unteren Einschließungsschicht (17),

- eine intermediäre Einschließungsschicht (19), vorzugsweise aus binärem InP-Material und mit 1 μm Dicke, mit einem niedrigeren Brechungsindex als dem der unteren Führungsschicht (18),

- eine intermediäre Führungsschicht (20), vorzugsweise aus quaternärem InGaAsP-Material und mit 0,1 μm Dikke, mit einer Wellenlänge des verbotenen Bandes $\lambda_g$ von 1,3 μm und einem höheren Brechungsindex als dem der intermediären Einschließungsschicht (19),

- eine obere Einschließungsschicht (21), vorzugsweise aus binärem InP-Material und mit 1 μm Dicke, mit einem niedrigeren Brechungsindex als dem der intermediären Führungsschicht (20),

- eine obere Führungsschicht (22), vorzugsweise aus quaternärem InGaAsP-Material und mit 0,65 μm Dicke, mit einer Wellenlänge des verbotenen Bandes $\lambda_g$ von 1,3 μm und einem höheren Brechungsindex als dem der oberen Einschließungsschicht (21).

7. Filter nach einem der Ansprüche 5 und 6, **dadurch gekennzeichnet, dass** die Stapelung der intermediären Einschließungsschicht (19), der intermediären Führungsschicht (20) und der oberen Einschließungsschicht (21) so geätzt ist, dass sie in einem Schnitt in einer zur Ausbreitungsrichtung des Lichtes quer verlaufenden Schnittebene einen sich nach oben verjüngenden trapezförmigen Querschnitt aufweist.

8. Verfahren zur Herstellung eines Mehrwellenlängenfilters (1) mit einem Bündel von optischen Leitern ($g_1$, ..., $g_n$) von dem Typ, bei dem die Polarisationsunempfindlichkeit durch eine Variation der Doppelbrechung der optischen Leiter erzielt ist, wobei letztere jeweils auf wenigstens zwei Abschnitten ihrer Länge unterschiedliche Doppelbrechungen aufweisen, **dadurch gekennzeichnet, dass** es die Schritte umfasst, die darin beruhen,

- durch Epitaxie die folgende Schichtfolge abzuscheiden:

-- eine untere Einschließungsschicht (17), vorzugsweise aus binären InP-Material und mit 1 μm Dicke,

-- eine untere Führungsschicht (18), vorzugsweise aus quaternärem InGaAsP-Material und mit 0,1 μm Dicke und einer Wellenlänge des verbotenen Bandes $\lambda_g$ von 1,3 μm und einem höheren Brechungsindex als dem der unteren Einschließungsschicht (17),

-- eine intermediäre Einschließungsschicht (19), vorzugsweise aus binärem InP-Material und mit 1 μm Dicke und einem niedrigeren Brechungsindex als dem der unteren Führungsschicht (18),

-- eine intermediäre Führungsschicht (20), vorzugsweise aus quaternärem InGaAsP-Material mit 0,1 μm Dicke und einer Wellenlänge des verbotenen Bandes $\lambda_g$ von 1,3 μm und einem höheren Brechungsindex als dem der intermediären Einschließungsschicht (19),

-- eine obere Einschließungsschicht (21), vorzugsweise aus binärem InP-Material und mit 1 µm Dicke, mit einem niedrigeren Brechungsindex als dem der intermediären Führungsschicht (20),

-- eine obere Führungsschicht (22), vorzugsweise aus quaternärem InGaAsP-Material mit 0,65 µm Dicke und einer Wellenlänge des verbotenen Bandes $\lambda_g$ von 1,3 µm und einem höheren Brechungsindex als dem der oberen Einschließungsschicht (21),

- eine Maske zu bilden,
- die optischen Leiter (4, 5) für die Zu- und Abführung des Lichtes des Filters (1) durch Beseitigen der oberen Führungsschicht (22) und Ätzen der oberen Einschließungsschicht (21) zu einem Band zu erzeugen,
- durch das Bündel von optischen Leitern verbundene Aufweitungszonen (2, 3) durch Beseitigen der oberen Führungsschicht (22) und Ätzen der oberen Einschließungsschicht (21) auf der Seite der optischen Leiter (4, 5) zum Zu- und Abführen des Lichtes des Filters (1) und auf der Seite des Bündels von optischen Leitern ($g_1$, ..., $g_n$) durch tieferes Ätzen bis zur unteren Führungsschicht (18) zu erzeugen,
- Abschnitte von optischen Leitern ($g_1$, ..., $g_n$), die sich in den Endzonen (6, 8) erstrecken, durch Beseitigen der oberen Führungsschicht (22) und Ätzen bis zur unteren Führungsschicht (18) zu erzeugen,
- Abschnitte von optischen Leitern ($g_1$, ..., $g_n$), die sich in einer die Endzonen verbindenden Zwischenzone (7) erstrecken, durch Ätzen der oberen Führungsschicht (22) zu einem Band und beiderseits des in der oberen Führungsschicht (22) erzeugten Bandes tieferes Ätzen bis zur unteren Führungsschicht (18) zu erzeugen,
- sanduhrförmige Modenadapter (T) am Übergang der sich jeweils in einer Endzone (6; 8) bzw. in der intermediären Zone (7) befindenden Leiterabschnitte zu ätzen.

9. Verfahren zum Herstellen eines Mehrwellenlängenfilters (1') mit einem Bündel von optischen Leitern ($g_1$, ..., $g_n$) von dem Typ, bei dem die Polarisationsunempfindlichkeit durch eine Variation der Doppelbrechung der optischen Leiter erreicht wird, wobei letztere jeweils auf wenigstens zwei Abschnitten ihrer Länge unterschiedliche Doppelbrechungen aufweisen, **dadurch gekennzeichnet, dass** es die Schritte umfasst, die darin beruhen,

- durch Epitaxie die folgende Schichtfolge abzuscheiden:

-- eine untere Einschließungsschicht (17), vorzugsweise aus binärem InP-Material und mit 1 µm Dicke,

-- eine untere Führungsschicht (18), vorzugsweise aus quaternärem InGaAsP-Material und mit 0,1 µm Dicke und einer Wellenlänge des verbotenen Bandes $\lambda_g$ von 1,3 µm, mit einem höheren Brechungsindex als dem der unteren Einschließungsschicht (17),

-- eine intermediäre Einschließungsschicht (19), vorzugsweise aus binärem InP-Material und mit 1 µm Dicke und einem niedrigeren Brechungsindex als dem der unteren Führungsschicht (18),

-- einer intermediären Führungsschicht (20), vorzugsweise aus quaternärem InGaAsP-Material mit 0,1 µm Dicke und einer Wellenlänge der verbotenen Bandes $\lambda_g$ von 1,3 µm sowie einem höheren Brechungsindex als dem der intermediären Einschließungsschicht (19),

-- eine obere Einschließungsschicht (21), vorzugsweise aus binärem InP-Material und mit 1 µm Dicke und einem niedrigeren Brechungsindex als dem der intermediären Führungsschicht (20),

-- eine obere Führungsschicht (22), vorzugsweise aus quaternärem InGaAsP-Material mit 0,65 µm Dicke und mit einer Wellenlänge des verbotenen Bandes $\lambda_g$ von 1,3 µm und mit einem höheren Brechungsindex als dem der oberen Einschließungsschicht (21) ;

- eine Maske zu bilden;
- die optischen Leiter (4', 5') für die Zu- und Abführung des Lichtes des Filters durch Ätzen der oberen Führungsschicht (22) zu einem Band zu erzeugen,
- Aufweitungszonen (2', 3') zu bilden, die über das Bündel von optischen Leitern durch Ätzen der oberen Führungsschicht (22) verbunden sind,
- Abschnitte von optischen Leitern ($g_1$, ..., $g_n$), die sich in den Endzonen (11, 13) erstrecken, durch Ätzen der oberen Führungsschicht (22) zu einem Band in den den Aufweitungszonen (2', 3') benachbarten Regionen (26) und dann tieferes Ätzen bis hin zur unteren Führungsschicht (18) jenseits dieser Regionen (26) zu erzeugen,
- Abschnitte von optischen Leitern ($g_1$, ..., $g_n$), die sich in einer die Endzonen verbindenden intermediären Zone (12) erstrecken, durch Beseitigen der oberen Führungsschicht (22) und Ätzen bis zur unteren Führungsschicht (18) zu erzeugen,

- sanduhrförmige Modenadapter (T') am Übergang der Leiterabschnitte zu ätzen, die sich jeweils in einer Endzone (11; 13) und in der Zwischenzone (12) befinden.

## Claims

1. A multi-wavelength filter (1; 1') having a bundle of optical waveguides ($g_1$, ..., $g_n$) formed on a common substrate and organized in such a manner that the waveguide response of the filter depends on the phase shifting to which light is subject in the optical waveguides of the bundle, the filter being made insensitive to polarization by varying the birefringence of the optical waveguides, each of which has at least two portions along its length that are of different birefringences, and the filter being **characterized in that** said portions are connected together by a mode matcher (T; T').

2. A filter according to claim 1, **characterized in that** each optical waveguide of said bundle has two end zones (6, 8; 11, 13) of the same birefringence and an intermediate zone (7; 12) of birefringence different from that of the end zones, and **in that** the sets of transitions in the bundle between the intermediate zones and the pairs of end zones extend along respective planes that are inclined relative to the propagation direction of the light along the waveguides.

3. A filter according to claim 1 or 2, **characterized in that** the mode matcher (T; T') is hourglass-shaped.

4. A filter according to any one of claims 1 to 3, **characterized in that** said waveguide portions interconnected by a mode matcher (T; T') have structures respectively of the diluted type having a broad propagation mode and of the single heterostructure type having a narrow propagation mode.

5. A filter according to claim 4, **characterized in that** said diluted type structure comprises a stack of the following layers:

a 1 µm thick bottom confinement layer (17) preferably of an InP binary material;
a 0.1 µm thick bottom guide layer (18), preferably of an InGaAsP quaternary material, having a forbidden band wavelength $\lambda_g$ equal to 1.3 µm, with a refractive index greater than that of the bottom confinement layer (17);
a 1 µm thick intermediate confinement layer (19), preferably of an InP binary material, with a refractive index less than that of the bottom guide layer (18);
a 0.1 µm thick intermediate guide layer (20), preferably of InGaAsP quaternary material, having a forbidden band wavelength $\lambda_g$ equal to 1.3 µm, with a refractive index greater than that of the intermediate confinement layer (19); and
a 1 µm thick top confinement layer (21), preferably of an InP binary material, with a refractive index less than that of the intermediate guide layer (20).

6. A filter according to claim 4 or 5, **characterized in that** the structure of the single heterostructure type comprises a stack of the following layers:

a 1 µm thick bottom confinement layer (17) preferably of an InP binary material;
a 0.1 µm thick bottom guide layer (18), preferably of an InGaAsP quaternary material, having a forbidden band wavelength $\lambda_g$ equal to 1.3 µm, with a refractive index greater than that of the bottom confinement layer (17);
a 1 µm thick intermediate confinement layer (19), preferably of an InP binary material, with a refractive index less than that of the bottom guide layer (18);
a 0.1 µm thick intermediate guide layer (20), preferably of InGaAsP quaternary material, having a forbidden band wavelength $\lambda_g$ equal to 1.3 µm, with a refractive index greater than that of the intermediate confinement layer (19);
a 1 µm thick top confinement layer (21), preferably of an InP binary material, with a refractive index less than that of the intermediate guide layer (20); and
a 0.65 µm thick top guide layer (22), preferably of InGaAsP quaternary material, having a forbidden band wavelength $\lambda_g$ equal to 1.3 µm, with a refractive index greater than that of the top confinement layer (21).

7. A filter according to claim 5 or 6, **characterized in that** said stack of intermediate confinement layer (19), intermediate guide layer (20), and top confinement layer (21) is etched so as to be trapezium-shaped in section in a section plane extending transversely to the light propagation direction, said section tapering upwards.

8. A method of making a multi-wavelength filter (1) having a bundle of optical waveguides ($g_1$, ..., $g_n$) of the type in which polarization insensitivity is obtained by varying the birefringence of the optical waveguides, each of which presents different birefringences on at least two length portions, the method being **characterized in that** it comprises the steps consisting in:

depositing the following sequence of layers by epitaxy:

· a 1 µm thick bottom confinement layer (17) preferably of an InP binary material;
· a 0.1 µm thick bottom guide layer (18), preferably of an InGaAsP quaternary material, having a forbidden band wavelength $\lambda_g$ equal to 1.3 µm, with a refractive index greater than that of the bottom confinement layer (17);
· a 1 µm thick intermediate confinement layer (19), preferably of an InP binary material, with a refractive index less than that of the bottom guide layer (18);
· a 0.1 µm thick intermediate guide layer (20), preferably of InGaAsP quaternary material, having a forbidden band wavelength $\lambda_g$ equal to 1.3 µm, with a refractive index greater than that of the intermediate confinement layer (19);
· a 1 µm thick top confinement layer (21), preferably of an InP binary material, with a refractive index less than that of the intermediate guide layer (20); and
· a 0.65 µm thick top guide layer (22), preferably of InGaAsP quaternary material, having a forbidden band wavelength $\lambda_g$ equal to 1.3 µm, with a refractive index greater than that of the top confinement layer (21);

forming a mask;
making optical waveguides (4, 5) for feeding light to and taking light from the filter (1), by removing the top guide layer (22) and by etching the top confinement layer (21) into a ribbon;
making expansion zones (2, 3) connected by the bundle of optical waveguides by removing the top guide layer (22) and by etching the top confinement layer (21) adjacent to the bundle of optical waveguides ($g_1$, ..., $g_n$) and adjacent to the optical waveguides (4, 5) for feeding light to and taking light from the filter (1) by deeper etching down to the bottom guide layer (18);
making optical waveguides portions ($g_1$, ..., $g_n$) extending into the end zones (6, 8), by removing the top guide layer (22) and by etching down to the bottom guide layer (18);
making optical waveguide portions ($g_1$, ..., $g_n$) extending in the intermediate zone (7) interconnecting said end zones, by etching the top guide layer (22) to form a ribbon and by deeper etching to the bottom guide layer (18) on either of the ribbon formed in said top guide layer (22); and
etching mode matchers (T) of hourglass-shape at the junctions between the waveguide portions situated respectively in an end zone (6; 8) and in the intermediate zone (7).

**9.** A method of making a multi-wavelength filter (1) having a bundle of optical waveguides ($g_1$, ..., $g_n$) of the type in which polarization insensitivity is obtained by varying the birefringence of the optical waveguides, each of which presents different birefringences on at least two length portions, the method being **characterized in that** it comprises the steps consisting in:

depositing the following sequence of layers by epitaxy:

· a 1 µm thick bottom confinement layer (17) preferably of an InP binary material;
· a 0.1 µm thick bottom guide layer (18), preferably of an InGaAsP quaternary material, having a forbidden band wavelength $\lambda_g$ equal to 1.3 µm, with a refractive index greater than that of the bottom confinement layer (17);
· a 1 µm thick intermediate confinement layer (19), preferably of an InP binary material, with a refractive index less than that of the bottom guide layer (18);
· a 0.1 µm thick intermediate guide layer (20), preferably of InGaAsP quaternary material, having a forbidden band wavelength $\lambda_g$ equal to 1.3 µm, with a refractive index greater than that of the intermediate confinement layer (19);
· a 1 µm thick top confinement layer (21), preferably of an InP binary material, with a refractive index less than that of the intermediate guide layer (20); and
· a 0.65 µm thick top guide layer (22), preferably of InGaAsP quaternary material, having a forbidden band wavelength $\lambda_g$ equal to 1.3 µm, with a refractive index greater than that of the top confinement layer (21);

forming a mask;
making optical waveguides (4', 5') for feeding light to and taking light from the filter, by etching the top guide layer (22) into a ribbon;
forming expansion zones (2', 3') interconnected by the optical waveguide bundle, by etching the top guide layer (22);
making optical waveguide portions ($g_1$, ..., $g_n$) extending in the end zones (11, 13), by etching the top waveguide layer (22) in the regions (26) adjacent to the expansion zones (2', 3') to form ribbons and then by etching deeper down to the bottom guide layer (18) beyond said regions (26);
making optical waveguide portions ($g_1$, ..., $g_n$)

extending in an intermediate zone (12) interconnecting said end zones, by removing the top guide layer (22) and etching down to the bottom guide layer (18); and

etching mode matchers (T') of hourglass-shape at the junctions between the waveguide portions situated in respective end zones (11; 13) and in the intermediate zone (12).

*FIG.1*

*FIG.2*

*FIG.3*

*FIG.4*

*FIG.5*

*FIG.6*

*FIG.7*

*FIG.8*

# FIG.9

# FIG.10